(19) Europäisches Patentamt
European Patent Office
Office européen des brevets

(11) EP 2 447 681 A2

(12) EUROPEAN PATENT APPLICATION

(43) Date of publication:
02.05.2012 Bulletin 2012/18

(51) Int Cl.:
*G01F 1/66* (2006.01)

(21) Application number: 11161146.3

(22) Date of filing: 05.04.2011

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 14.10.2010 LT 2010087

(71) Applicant: AB Axis Industries
47190 Kaunas (LT)

(72) Inventors:
• Ragauskas, Arminas
LT-51362, Kaunas (LT)

• Petkus, Vytautas
LT-48300, Kaunas (LT)
• Borodicas, Paulius
LT-54305, Kaunas district (LT)
• Bagdonas, Arnoldas
LT-45263, Kaunas (LT)
• Pamakstis, Virgilijus
LT-47161, Kaunas (LT)

(74) Representative: Petniunaite, Jurga
AAA Baltic Service Company
J. Jasinskio Street 16A
01112 Vilnius (LT)

(54) **Ultrasonic flowmeter**

(57) The invention relates to ultrasonic flowmeter which comprises measurement tube and ultrasonic transmitting and (or) receiving transducers, located inside the tube.

The measurement tube (2) between ultrasonic transducers has circular or rectangular cross-section, which is symmetrically divided by the longitudinal partition (5), and the field emitted by ultrasonic transducers is divided by the aforementioned longitudinal partition (5) into two parts (6, 7) in every side of the partition. In case of circular cross-section of the measurement tube, the partition divides the tube longitudinally into two symmetrical half-cylinders. In case of rectangular cross-section of the measurement tube the partition divides the measurement tube longitudinally into two symmetrical measurement tubes with triangular cross-sections.

Fig. 2

## Description

The invention relates to the devices designed for measuring of the volume, mass or flow of flowing liquid, that are used for measuring time-of-flight of ultrasound waves' transmission within the measurement tube of a measuring device by sending ultrasound wave upstream and downstream of the water flow, for example - in the ultrasonic flowmeters.

Having revised the patents and patent application in a technical view it may be stated that one of the most popular methods is the formation of measurement section which has rectangular, square or hexagonal shape. The major characteristic of such measurement section is as follows: after sending a spiral ultrasound wave along the measurement tube, one can perform measurements of flow rate that does not depend upon a type of fluid flow and profile of flow symmetry.

EP 0708313 B relates to an ultrasonic flowmeter, where flow is measured by sending an ultrasound wave along a pipe with square cross-section. The wave travels in a spiral acoustic path by reflecting from flat internal walls of the square pipe. Flow rate is measured at acoustic path which goes close to the region of intersection of laminar and turbulent profiles. Such way of flow rate measurement enables one to minimise requirements related to hydrodynamic correction.

EP 0715155 B relates to an ultrasonic flowmeter, where the flow is measured by sending an ultrasound wave along a pipe with hexagonal cross-section. The wave travels in spiral acoustic path along the pipe by reflecting from flat internal walls of the hexagonal pipe. By analogy to the flowmeter, described in patent EP 0708313, flow rate is measured at acoustic path which goes close to the region of intersection of laminar and turbulent profiles. This technical solution also provides an opportunity to perform flow measurements in optimal way and allows to minimize requirements related to hydrodynamic correction.

Although, in these cases one reaches a level of insensibility related distortion or variations of the flow profile, which depend upon a type of flow of the liquid, however this results in significant loss of ultrasound energy in reflecting surfaces due to numerous points of reflection and reduced power of ultrasound signal after it travels a distance from one ultrasonic transducer to another.

Patent applications W0942198 A and FR 2540624 A describe the concepts of measurement sections which read that having installed elements of a certain form inside the measurement section a flow of necessary profile can be formed, after integration of which, by means of ultrasound wave, an independence of measurement results from the profile changes is achieved.

Patent application W0942198 A, describes an invention wherein an ultrasonic flow measurement section is proposed, where in said invention a forming cylindrical rod is positioned at the central axis of the measurement tube in order to form a cylindrical and uniform flow.

EP 1742024 B relates to an ultrasonic flow meter with the measurement tube of triangular cross-section. Within the measurement tube of triangular cross-section one may achieve the spiral propagation of the ultrasound wave by sending an ultrasound wave at a certain angle to the flow and by reflecting the ultrasound wave from the internal walls of the tube twice (one bypass). Such method of ultrasound wave transmission enables minimisation of influence of flow profile changes - this is achieved in a way similar as in the measurement tube of square or hexagon cross-sections. Additional advantage of the triangular cross-section measurement tube is, that in such tube a number of reflection points on the internal wall may be reduced down to two. This makes it possible to reduce loss of ultrasound energy in the reflecting surfaces (by at least 30%) and to achieve more powerful signal after it travels a distance from one ultrasonic transducer to another. Invention in EP 1742024 B was chosen as a prototype because the concepts of ultrasound wave transmission within measurement tube as described in EP 1742024 B were developed and applied in the new invention.

This invention is aimed at expanding the range of the flow measurement, simplifying the construction of measurement tube and eliminating the points of reflection of an ultrasound wave from the internal walls of the measurement tube.

In order to achieve said objective in the ultrasonic flowmeter, which consists of the measurement tube, of at least two ultrasonic transducers, that are located at the points of inflow and outflow of the measurement section, the measurement tube between said two ultrasonic transducers is formed as a cylinder or having a circular, or tetragon cross-section and is symmetrically divided by means of longitudinal partition. The ultrasonic transducer emits a field, which is symmetrically divided by the aforementioned longitudinal partition into two fields and is propagated along the tube from one transducer to another in an acoustic path, which coincides with the section of intersection of profiles of flow rates of laminar and turbulent flow.

In the flowmeters of small dimensions ultrasonic transducers may be mounted on a wall of the measurement pipe, where they emit an ultrasound field perpendicularly to the pipe wall, the emitted field is directed into the measurement tube by means of mirrors, and within the measurement tube this field is divided by means of the aforementioned longitudinal partition.

Moreover, the ultrasonic transducers may be mounted on the measurement pipe wall in a manner that they would emit the ultrasound field at an inclined angle to the measurement tube of circular or rectangular cross-section, where the emitted field would propagate transversely to the measurement tube and would be divided by the aforementioned longitudinal partition. Depending on dimensions of the flow sensor, this angle of emission of the ultrasound field into the measurement tube may fall within the limits of 10...20 degrees (in flow sensors of small dimension) and 60...80 degrees (in flow sensors of large dimension).

The ultrasonic transducers in the measurement sections may also be mounted inside the measurement section at the inflow and outflow, in a manner that they would emit the ultrasound field directly into the measurement tube with cylindrical or tetragon cross-section and in the measurement tube this field would be divided by the aforementioned longitudinal partition.

The invention is explained with reference to the accompanying drawings:

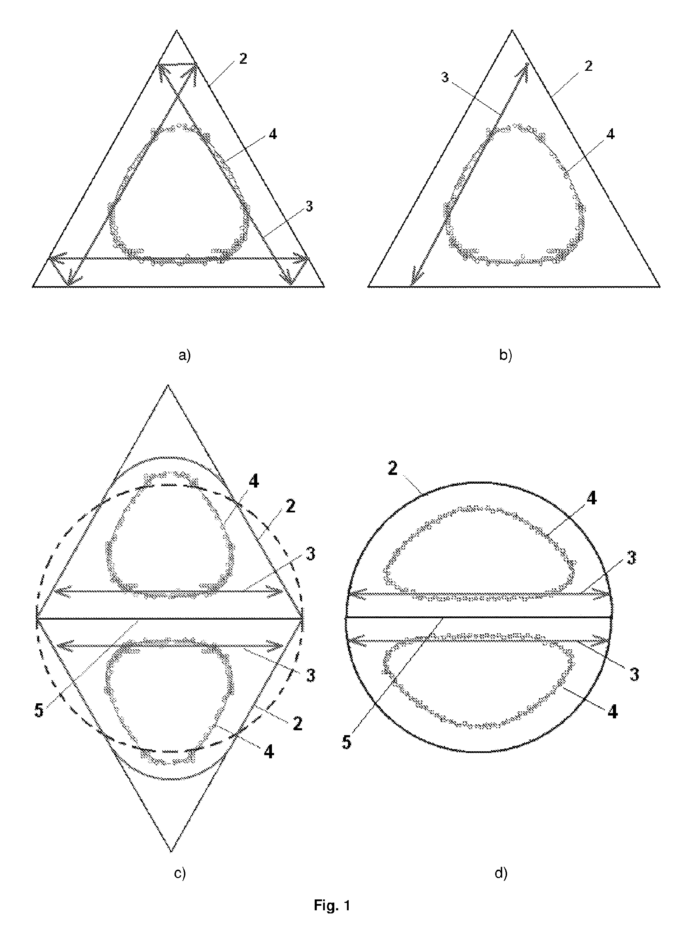

Fig. 1 presents schemes of transforming the measurement tube with triangular cross-section into the measurement tube with circular cross-section and a partition: a) triangular cross-section tube with optimal symmetrical transmission of ultrasound wave within tube ; b) triangular cross-section tube with non-symmetrical transmission of ultrasound wave within tube, c) two closely fitted measurement tubes of triangular cross-section, with non-symmetrical transmission of ultrasound wave within tube and rounded corners or the section of rectangular cross-section with a partition, d) measurement tube of circular cross-section with a partition;

Fig. 2 presents a schematic view of cylindrical measurement tube with a partition and mirrors that direct the ultrasound wave along the tube;

Fig. 3 presents a schematic view of the measurement channel with rectangular cross-section and a partition, as well as mirrors that direct the ultrasound wave along the tube;

Fig. 4 presents a schematic view of the cylindrical measurement tube with a partition and ultrasonic transducers, emitting the fields at an inclined angle to the measurement tube;

Fig. 5 presents a schematic view of the measurement tube with rectangular cross-section and a partition, as well as ultrasonic transducers, emitting the fields at an inclined angle to the measurement tube;

Fig. 6 presents a perspective view in longitudinal cross-section of the measurement tube with partition and mirrors that direct the ultrasound wave along the tube;

Fig. 7 presents a perspective view in longitudinal cross-section of the measurement tube with partition and ultrasonic transducers that are installed in the measurement tube.

Technical solution of the invention is presented after considering special characteristics of the measurement tube with triangular cross-section, which is used in patent EP 1742024 B. One of the specific features of the measurement tube with triangular cross-section is that in this channel 2 one may form an acoustic path 3 of the ultrasound wave propagation, which coincides in the optimum manner with the intersection area 4 of laminar and turbulent flow profiles (Fig. 1 a). In such measurement tube 2 the ultrasound signal is sent along the tube, parallel to the wall of the measuring tube, by forming a spiral-like propagation of the signal along the tube. Simpler version of such flow measurement is sending the ultrasound wave parallel along the measurement tube near one wall (Fig. 1 b).

In such version one may send the signal along the measurement section, discarding the reflection points from the walls of the tube. However, this version of flow measurement is more sensitive to the non-symmetrical characteristic of the flow profile. Flow profile symmetrisation is achieved by forming the measurement tube of two triangles that are put together, in which the ultrasound signal is sent along the measurement tube from both sides, parallel to the internal wall of the triangle (Fig. 1c). Technologically, the simplest implementation of such measurement tube is formation of two half-circles or installation of a partition 5 in the section of the measurement tube 2 with circular cross-section (Fig. 1d). In such a section of the measurement tube one ensures a symmetrical transmission of ultrasound wave in acoustic paths 3, which coincide with the area 4 of intersection of laminar and turbulent flow profiles from both sides of the partition 5 (Fig. 1 a) and, alongside, one avoids the points of reflection on internal walls of the measurement tube.

Moreover, in such a measurement section, where ultrasound signal propagates in an acoustic path, which coincides with the area of intersection of velocity profiles of laminar and turbulent flow, one minimizes an influence of changes in the flow regime of flow profile (turbulent or laminar) and the influence of the change of the fluid's viscosity.

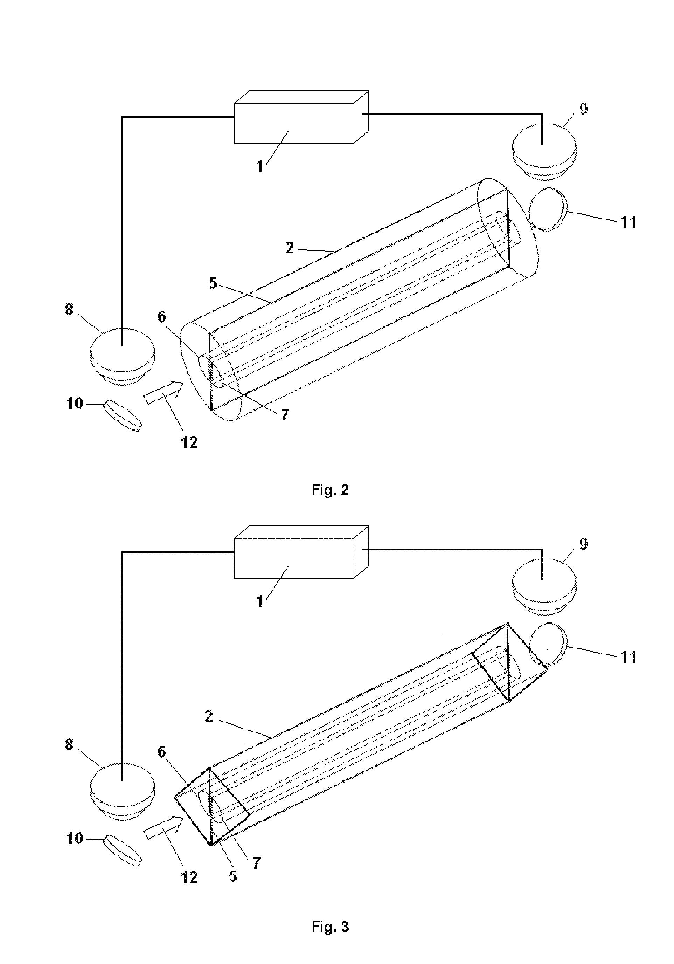

Flowmeter comprises a microprocessor calculator of flow 1, which acts according to the typical principle of time-of-flight measurement, measurement tube 2, the cross-section of which is of circular form, two ultrasonic transducers 8 and 9, that emit an acoustic wave, which is subsequently divided by the partition 5 into two acoustic paths 3 of ultrasound wave propagation. While the ultrasound wave travels along the measurement tube, the half-cylinders 6 and 7 (on both sides of the partition) of optimum flow integration are formed in the acoustic paths 3. Fig 2 shows a version, where ultrasonic transducers 8 and 9 emit the ultrasound wave perpendicularly to the direction 12 of the flowing flow. The ultrasound wave is directed along the measuring tube 2 by means of mirrors 10 and 11. Fig. 2 shows a version of the measurement section, which is the most convenient for implementation in flow sensors of small dimensions (DN≤50).

Fig. 3 shows a similar version to Fig. 2, only in this case, the measurement tube consists of a pipe with rectangular cross-section and internal, longitudinally positioned, partition 5. Partition 5 divides the measuring tube with rectangular cross-section into two measurement tubes with triangular cross-section.

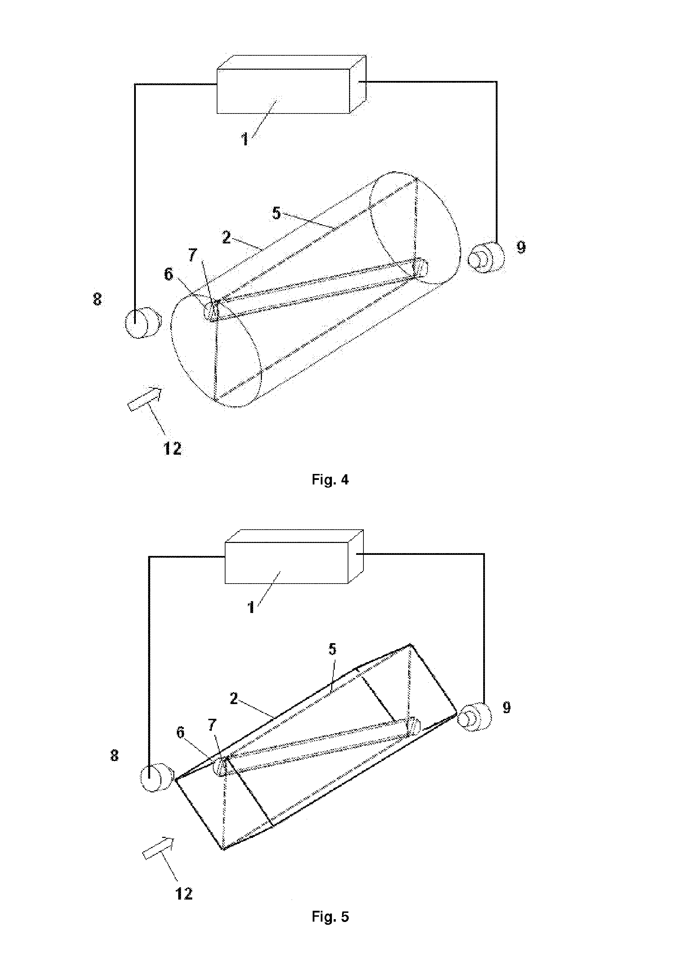

Fig. 4 shows a version of the measurement section, where ultrasonic transducers 8 and 9 emit the ultrasound wave at a certain angle to the flow 12, that flows in the measuring tube with circular cross-section 2. In the course of propagation within the measurement tube 2 with partition 5, the ultrasound wave is divided into two half-cylinders 6 and 7 that integrate the flow. Fig. 4 shows a version of the measurement section, which is the most convenient for implementation in the flowmeters of bigger dimensions (DN>50).

Fig. 5 shows a version which is similar to Fig. 4, only in this case the measurement tube consists of a pipe with rectangular cross-section and internal, longitudinally positioned, partition 5. Partition 5 divides the measurement tube with rectangular cross-section into two measurement tubes with triangular cross-section.

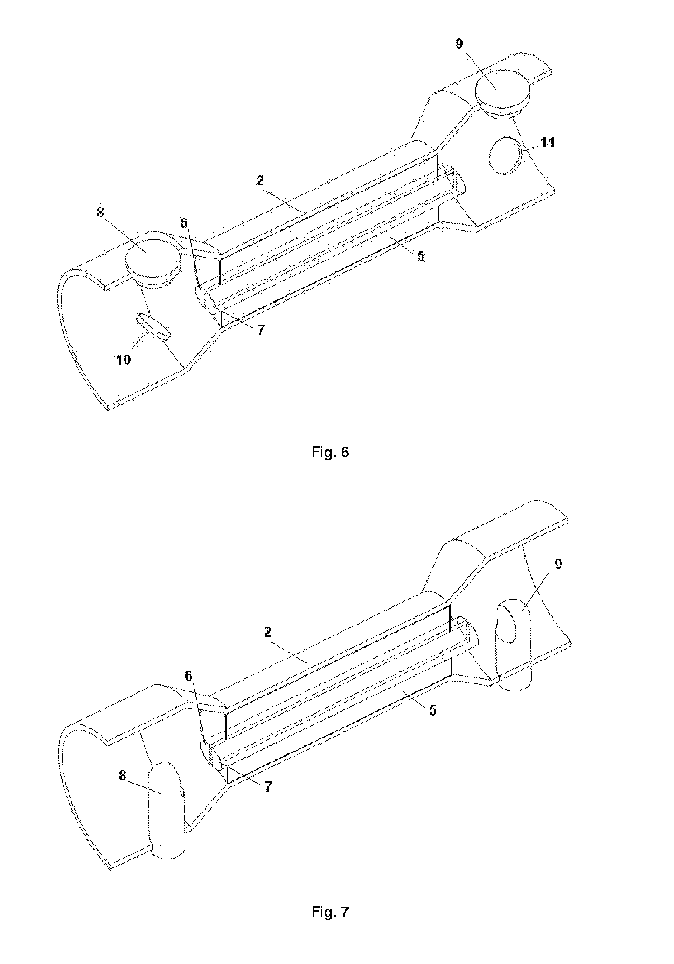

Fig. 6 shows a perspective view in a longitudinal section of the same version of the measuring section (Fig. 2).

Fig. 7 shows a version, where ultrasonic transducers 8 and 9 are installed in the measurement section at both ends of the measuring tube with circular cross-section and directly emit the ultrasound wave into aforementioned measuring tube 2 with circular cross-section and partition 5 which is installed longitudinally inside the tube. In the course of propagation in the tube 2 of the measurement section with partition the ultrasound wave is divided into two half-cylinders 6 and 7. Fig. 7 shows a version of the measurement section, which is the most convenient for implementation in measurement sections of smaller dimensions (DN<50).

Flow rate value is determined according to time-of-flight of ultrasound pulse propagation in the tube 2 that are measured by microprocessor calculator of the flow 1. Measurement is made by sending an ultrasound pulse upstream and downstream of the flow:

$$Q = K * Kh*(1/T(+)-1/T(-))$$

Where T(+) -time-of-flight of ultrasound pulse propagation, when the signal travels downstream of the flow, which is measured by means of microprocessor flow calculator;
T(-) - time-of-flight of ultrasound pulse propagation, when the signal travels upstream of the flow, which is measured by means of microprocessor flow calculator;
K - coefficient of proportionality that depends upon dimensions of the measurement tube;
Kh - coefficient of hydrodynamic correlation of the flow measuring device, which depends upon rate of flow and, alongside, flow regime;
Q - value of flow rate, which is calculated by means of microprocessor flow calculator.

Experimental research revealed that in the flow measurement device (diameter DN20, nominal flow qp=1,5 m³/h), in which the cylindrical measurement tube had no partition, the non-uniformity of the hydrodynamic correction coefficient Kh within the flow ranges 0,025 m³/h to 5 m³/h comprised approx. 20%. Having installed in the same tube a partition for dividing a flow, the non-uniformity of the hydrodynamic correction coefficient Kh was reduced down to 4%. Such reduction of the hydrodynamic correction coefficient illustrates the fact, that upon installation of the partition sensitivity of the measuring results, with respect to the flow regime, becomes reduced (by approx. 5 times). Moreover, requirements related to the measuring device calibration procedure become reduced due to the fact that less calibration points are necessary in order to find the hydrodynamic correction coefficient Kh.

The proposed measurement section would enable attainment of advantages of analogous patented products that exist in the market, i.e. low sensitivity to distortions or changes of flow profile that are caused by type of liquid flow, as well as minimum requirements related to length of straight parts of pipeline before and after flowmeter, and alongside would enable a wider flow measurement range due to insensibility of the measurement section to the changes in the viscosity of liquid.

**Claims**

1. Ultrasonic flowmeter comprising a measurement tube, at least two ultrasonic transducers that are located at the inflow and outflow of the measurement section, which is **characterised in that** the measurement tube (2) between the ultrasonic transducers is of cylindrical form and is symmetrically divided by means of longitudinal partition (5).

2. Ultrasonic flowmeter according to claim 1, **characterised in that** a field emitted by ultrasonic transducers is symmetrically divided by the aforementioned longitudinal partition (5) into two fields (6 and 7).

3. Ultrasonic flowmeter according to claims 1 or 2, **characterised in that** the ultrasonic transducers are installed in such a way, that they would emit the field at an inclined angle into the measurement tube (2) with circular section and the field emitted by them would propagate inside the tube across the cylindrical tube, in which it is divided by means of longitudinal partition.

4. Ultrasonic flowmeter according to any of claims 1 - 3, **characterised in that** the ultrasonic transducers are mounted on the wall of pipe of the measurement section at the inflow and outflow, the field (6, 7) emitted by them is reflected by means of the mirrors that are installed on the measuring channel at the points of inflow and outflow (10, 11), and in the cylindrical part of the measurement tube (2) is divided by means of the aforementioned longitudinal partition (5).

**5.** Ultrasonic flowmeter according to any of claims 1 - 3, **characterised in that** ultrasonic transducers are mounted inside the measuring section at the points of inflow and outflow in a way, that they directly emit the ultrasound field into the measuring tube (2) with circular cross-section, in which the ultrasound field is divided by means of the aforementioned longitudinal partition (5).

**6.** Ultrasonic flowmeter, comprised of measurement tube, at least two ultrasonic transducers, that are located at the inflow and outflow of the measurement section, **characterised in that** the section of the measurement tube (2) between the ultrasonic transducers is of rectangular cross-section and is symmetrically divided by the longitudinal partition (5) into two measurement tubes with triangular cross-sections.

**7.** Ultrasonic flowmeter according to claim 6, **characterised in that** the field emitted by ultrasonic transducers is symmetrically divided by means of the aforementioned longitudinal partition (5) into two fields (6, 7).

**8.** Ultrasonic flowmeter according to claims 6 or 7, **characterised in that** the ultrasonic transducers are installed in the measurement section so that they emit the field at an inclined angle into the measurement tube (2) with circular cross-section and the field emitted by them would propagate inside the tube across the measurement tube, in which it is divided by means of longitudinal partition (5).

**9.** Ultrasonic flowmeter according to any of claims 6 - 8, **characterised in that** ultrasonic transducers are mounted on the wall of the pipe of the measurement section at the points of inflow and outflow, the field emitted by them (6, 7) is reflected by means of mirrors that are installed on the measurement tube at the points of inflow and outflow (10, 11), and in the part (2) of the measurement tube it is divided by means of the aforementioned longitudinal partition (5).

**10.** Ultrasonic flowmeter according to any of claims 6 - 8, **characterised in that** the ultrasonic transducers are mounted inside the measurement section at the points of inflow and outflow in a way, that they directly emit the ultrasound field into the measurement tube (2), in which the ultrasound field is divided into two parts by means of the aforementioned longitudinal partition (5).

a)

b)

c)

d)

Fig. 1

Fig. 2

Fig. 3

Fig. 4

Fig. 5

Fig. 6

Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0708313 B
- EP 0715155 B
- EP 0708313 A
- WO 942198 A
- FR 2540624 A
- EP 1742024 B